# EUROPEAN PATENT APPLICATION

(11) **EP 4 848 226 A1**
(43) Date of publication of application: **02.12.2026**
(21) Application number: 24927405.1
(22) Date of filing: 26.02.2024
(51) Int. Cl.: G06V 20/40, H04N 21/218, H04N 21/81, H04N 21/234, H04N 23/661, G06T 7/70

(54) **DATA ANALYSIS METHOD AND ELECTRONIC DEVICE FOR PERFORMING SAME METHOD**

(71) Applicant: Pixelscope Inc., Seoul 06236 (KR)
(72) Inventor: KWON, Gee Hwan, Yongin-si, Gyeonggi-do 16822 (KR); KOO, Kyung Mo, Seoul 08603 (KR); LEE, Sang Won, Wonju-si, Gangwon-do 26482 (KR)
(74) Representative: Kim Kang, Jae Hee
(86) International application number: PCT/KR2024/002441
(87) International publication number: WO 2025/183232

(57) **Abstract**

Disclosed are a method of analyzing data and an electronic device performing the method. An electronic device according to various embodiments includes at least one processor, and a memory electrically connected to the at least one processor and storing at least one instruction executed by the processor, wherein the at least one processor, when the at least one instruction is executed, may cause the electronic device to: receive, from a plurality of cameras, a plurality of images captured with respect to a filming space; identify at least one object included in the plurality of images for each set frame; determine, for each set frame, a position of the at least one object in a three-dimensional coordinate system set with respect to the filming space; determine data related to the position of the at least one object; and transmit the data to a user terminal.

## Description

### TECHNICAL FIELD

The following disclosure relates to a method of analyzing data and an electronic device performing the method.

### BACKGROUND ART

As public interest in sports games increases, demand for analysis data regarding sports games is increasing.

The analysis data may be provided to general viewers, and may also be used for training and management of players, and the like. In addition, when a sports game is broadcast in real time, data analyzed during the broadcasting of the sports game may be provided.

In order to analyze data, for example, a soccer player may play a game while wearing a separate device, and information regarding the player's movements and motions may be collected by using the device worn by the player. In order to analyze data, information regarding the player's movements and motions may be collected according to various methods.

The above-described background art is what the inventors possessed or acquired in the process of deriving the disclosure of the present application, and cannot necessarily be said to be known art disclosed to the general public prior to the filing of the present application.

### DETAILED DESCRIPTION OF THE INVENTION

### TECHNICAL PROBLEM

According to various embodiments, a method of analyzing data capable of analyzing data from captured images without a separate device and providing the analyzed data, and an electronic device performing the method may be provided.

However, the technical problems are not limited to the above-described technical problems, and other technical problems may exist.

### MEANS FOR SOLVING THE PROBLEM

An electronic device according to various embodiments includes at least one processor, and a memory electrically connected to the at least one processor and storing at least one instruction executed by the processor, wherein the at least one processor, when the at least one instruction is executed, may cause the electronic device to: receive, from a plurality of cameras, a plurality of images captured with respect to a filming space; identify at least one object included in the plurality of images for each set frame; determine, for each set frame, a position of the at least one object in a three-dimensional coordinate system set with respect to the filming space; determine data related to the position of the at least one object; and transmit the data to a user terminal.

The at least one processor may determine two-dimensional coordinates of the at least one object by using each of the plurality of images, and determine the position of the at least one object by using the two-dimensional coordinates of the at least one object.

The at least one processor may recognize additional information by using the plurality of images, and determine the data based on the position of the at least one object and the additional information.

The at least one processor may determine prediction data regarding the at least one object by using at least one of the position of the at least one object or the data.

The at least one processor may identify a broadcast video regarding the filming space and the at least one object, and transmit the broadcast video and the data to the user terminal.

The at least one processor may receive, from the plurality of cameras, a plurality of second images for generating the broadcast video, and generate the broadcast video with at least one image among the plurality of second images based on the type and position of the at least one object.

The at least one processor may control at least one camera among the plurality of cameras based on the type and position of the at least one object.

The at least one processor may generate a broadcast video in which the data is visually overlapped on the broadcast video, and transmit the overlapped broadcast video to the user terminal.

The at least one processor may transmit the data to the user terminal in response to a request received from the user terminal.

A method of analyzing data according to various embodiments may include: receiving, from a plurality of cameras, a plurality of images captured with respect to a filming space; identifying at least one object included in the plurality of images for each set frame; determining, for each set frame, a position of the at least one object in a three-dimensional coordinate system set with respect to the filming space; determining data related to the position of the at least one object; and transmitting the data to a user terminal.

The determining of the position of the at least one object may include determining two-dimensional coordinates of the at least one object by using each of the plurality of images, and determining the position of the at least one object by using the two-dimensional coordinates of the at least one object.

The method of analyzing data may further include recognizing additional information by using the plurality of images, and in the determining of the data, the data may be determined based on the position of the at least one object and the additional information.

The method of analyzing data may further include determining prediction data regarding the at least one object by using at least one of the position of the at least one object or the data.

The method of analyzing data may further include identifying a broadcast video regarding the filming space and the at least one object, and the transmitting to the user terminal may include transmitting the broadcast video and the data to the user terminal.

The receiving of the broadcast video may include receiving, from the plurality of cameras, a plurality of second images for generating the broadcast video, and generating the broadcast video with at least one image among the plurality of second images based on the type and position of the at least one object.

The method of analyzing data may further include controlling at least one camera among the plurality of cameras based on the type and position of the at least one object.

The transmitting of the broadcast video and the data to the user terminal may include generating a broadcast video in which the data is visually overlapped on the broadcast video, and transmitting the overlapped broadcast video to the user terminal.

The transmitting to the user terminal may include transmitting the data to the user terminal in response to a request received from the user terminal.

### ADVANTAGEOUS EFFECTS OF THE INVENTION

According to various embodiments, a method of analyzing data and an electronic device performing the method may collect information regarding a position and movement of an object from captured images, and determine data by analyzing the collected information.

According to various embodiments, a method of analyzing data and an electronic device performing the method may provide analyzed data, or provide the analyzed data in combination with a broadcast video.

### BRIEF DESCRIPTION OF THE DRAWINGS

FIG. 1A is a schematic block diagram of an electronic device, a user terminal, and a camera module according to various embodiments.
FIG. 1B is a schematic block diagram of an electronic device according to various embodiments.
FIG. 2 is an operational flowchart of a method of analyzing data performed by an electronic device according to various embodiments.
FIG. 3 is a diagram illustrating a plurality of detection cameras and a plurality of filming cameras arranged in a filming space according to various embodiments.
FIGS. 4A, 4B, 4C, and 4D are diagrams illustrating an operation in which an electronic device recognizes an object, according to various embodiments.
FIGS. 5A, 5B, 5C, and 5D are diagrams illustrating an operation in which an electronic device determines a position of an object, according to various embodiments.
FIG. 6 is a diagram illustrating an operation in which an electronic device generates data, according to various embodiments.
FIGS. 7A, 7B, 7C, and 7D are diagrams illustrating data provided by an electronic device according to various embodiments.

### MODES FOR CARRYING OUT THE INVENTION

Specific structural or functional descriptions of the embodiments are disclosed for illustrative purposes only, and may be changed and implemented in various forms. Accordingly, the actually implemented forms are not limited to the specific embodiments disclosed, and the scope of the present specification includes changes, equivalents, or substitutes included in the technical idea described in the embodiments.

Although terms such as first or second may be used to describe various components, these terms should be interpreted only for the purpose of distinguishing one component from another component. For example, a first component may be named a second component, and similarly, the second component may also be named the first component.

When a certain component is referred to as being "connected" to another component, it should be understood that the certain component may be directly connected or joined to the other component, but another component may exist therebetween.

A singular expression includes a plural expression unless the context clearly indicates otherwise. In the present document, each of phrases such as "A or B", "at least one of A and B", "at least one of A or B", "A, B, or C", "at least one of A, B, and C", and "at least one of A, B, or C" may include any one of the items listed together in the corresponding phrase among the phrases, or all possible combinations thereof. In the present specification, it should be understood that terms such as "comprise" or "have" are intended to designate the existence of a described feature, number, step, operation, component, part, or a combination thereof, and do not preclude in advance the existence or possibility of addition of one or more other features, numbers, steps, operations, components, parts, or combinations thereof.

Unless otherwise defined, all terms used herein, including technical or scientific terms, have the same meanings as those generally understood by those of ordinary skill in the relevant art. Terms such as those defined in commonly used dictionaries should be interpreted as having meanings consistent with the meanings in the context of the related art, and are not interpreted in ideal or excessively formal meanings unless clearly defined in the present specification.

The term "module" used in the present document may include a unit implemented in hardware, software, or firmware, and may be used interchangeably with terms such as, for example, logic, logic block, part, or circuit. A module may be an integrally configured part, or a minimum unit of the part or a portion thereof that performs one or more functions. For example, according to an embodiment, the module may be implemented in the form of an application-specific integrated circuit (ASIC).

The term '~unit' used in the present document refers to software or a hardware component such as an FPGA or an ASIC, and the '~unit' performs certain roles. However, the '~unit' is not limited to software or hardware. The '~unit' may be configured to reside in an addressable storage medium, or may be configured to run one or more processors. For example, the '~unit' may include components such as software components, object-oriented software components, class components, and task components, as well as processes, functions, attributes, procedures, subroutines, segments of program code, drivers, firmware, microcode, circuits, data, databases, data structures, tables, arrays, and variables. Functions provided in the components and the '~units' may be combined into a smaller number of components and '~units', or may be further separated into additional components and '~units'. In addition, the components and the '~units' may be implemented to run one or more CPUs in a device or a secure multimedia card. Also, the '~unit' may include one or more processors.

Hereinafter, embodiments will be described in detail with reference to the accompanying drawings. In the description with reference to the accompanying drawings, the same components are given the same reference numerals regardless of the drawing numerals, and redundant descriptions thereof will be omitted.

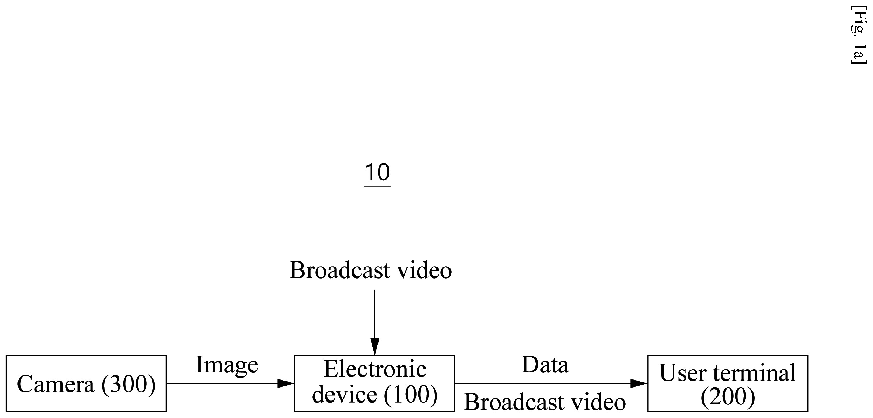

FIG. 1A is a schematic block diagram of an electronic device 100, a user terminal 200, and a camera 300 according to various embodiments.

As illustrated in FIG. 1A, a system 10 may include the electronic device 100, the user terminal 200, and the camera 300.

Referring to FIG. 1A, the electronic device 100 according to various embodiments may receive a plurality of images from the camera 300. For example, the camera 300 may include a plurality of detection cameras and a plurality of filming cameras.

As an example, the electronic device 100 may receive a plurality of images from the plurality of detection cameras in order to identify a type and position of an object. The electronic device 100 may receive, from the plurality of filming cameras, a plurality of second images for generating a broadcast video.

The electronic device 100 may identify at least one object existing in a filming space by using the plurality of images. For example, the electronic device 100 may identify the at least one object by inputting the plurality of images into a trained model 140. For example, the model 140 may be trained to output, when a plurality of images are input, types of objects (e.g., a player, a ball, a referee, a goalpost, a table tennis table, etc.) included in the plurality of images. The electronic device 100 may identify the object for each set frame.

As an example, the electronic device 100 may determine a position of the identified object by using the plurality of images. For example, the electronic device 100 may determine the position of the identified object in a three-dimensional coordinate system set with respect to the filming space. The electronic device 100 may determine the position of the object for each set frame.

For example, the electronic device 100 may determine two-dimensional coordinates of the at least one object by using each of the plurality of images. For example, the electronic device 100 may determine a pixel (or a pixel area) in which the object is located in an image as the two-dimensional coordinates of the object.

As an example, the electronic device 100 may determine the position of the at least one object by using the two-dimensional coordinates of the at least one object. The electronic device 100 may determine the position (e.g., three-dimensional coordinates) of the object by using the positions of the plurality of detection cameras in the set three-dimensional coordinate system and the two-dimensional coordinates of the object (in the plurality of images).

As an example, the electronic device 100 may determine data related to the position of the at least one object. For example, the electronic device 100 may generate the data by using the type and position of the object determined for each set frame.

As an example, the electronic device 100 may receive a broadcast video from an external electronic device. The electronic device 100 may transmit the broadcast video and the data to the user terminal 200. For example, the electronic device 100 may transmit, to the user terminal 200, a broadcast video on which visualized data is overlapped. For example, the electronic device 100 may transmit, to the user terminal 200, a broadcast video combined with visualized data.

As an example, the electronic device 100 may transmit the determined broadcast video and data to the user terminal 200. The electronic device 100 may determine a control signal based on the type and position of the identified object obtained by using the camera 300. For example, the electronic device 100 may determine the control signal by inputting the position of the identified object into a trained second model. The second model may be trained to output a control signal when the type of the identified object and the position of the object are input.

As an example, the electronic device 100 may transmit the control signal to the plurality of filming cameras. The electronic device 100 may control the plurality of filming cameras by using the control signal.

For example, the electronic device 100 may determine a broadcast video according to the control signal. The electronic device 100 may determine the broadcast video by using at least one second image among the plurality of second images received from the plurality of filming cameras.

As an example, the control signal may include information regarding a filming camera selected from among the plurality of filming cameras to generate the broadcast video, and information regarding an operation of the selected filming camera (e.g., pan, tilt, zoom (PTZ) values, direction/angle/magnification values, etc.). The electronic device 100 may determine, according to the control signal, a filming camera from which a second image to be used as the broadcast video is to be obtained. The electronic device 100 may determine, as the broadcast video, the second image obtained from the filming camera determined from among the plurality of filming cameras.

As an example, the plurality of filming cameras may be controlled according to the control signal received from the electronic device 100. For example, each of the plurality of filming cameras may operate according to information included in the control signal (e.g., pan, tilt, zoom (PTZ) values, direction/angle/magnification values, etc.). For example, each of the plurality of filming cameras may include an operation module (e.g., an actuator, a motor, etc.). Each of the operation modules of the plurality of filming cameras may operate according to the control signal.

As an example, the electronic device 100 may transmit the broadcast video to the user terminal 200. The electronic device 100 may receive, from the user terminal 200, information regarding the user terminal 200 (e.g., a terminal type, terminal specifications, user information, etc.). The electronic device 100 may post-process the broadcast video based on the information regarding the user terminal 200. The electronic device 100 may transmit the post-processed broadcast video to the user terminal 200.

For example, the post-processing may include processing of changing a format of a video, compressing a video, or changing a size of a video. For example, the post-processing may include processing of changing contents of the broadcast video, such as adding an additional video (e.g., an advertisement video) to the broadcast video or adding an auxiliary object.

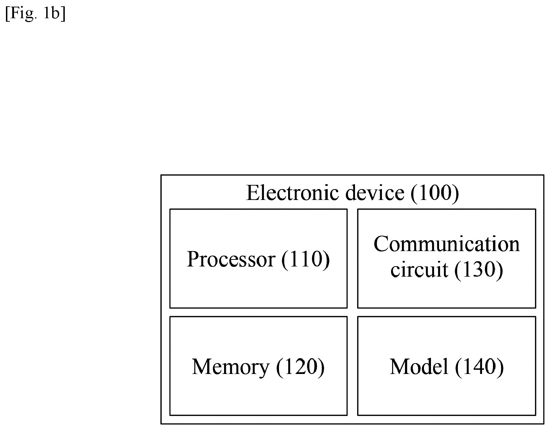

FIG. 1B is a schematic block diagram of the electronic device 100 according to various embodiments.

Referring to FIG. 1B, the electronic device 100 according to various embodiments may include a processor 110, a memory 120, a communication circuit 130, and a model 140.

The memory 120 may store various data used by at least one component (e.g., the processor 110) of the electronic device 100. For example, the data may include software (or a program, an application, etc.), and input data or output data for a command related thereto. The memory 120 may include a volatile memory or a non-volatile memory.

As an example, the processor 110 may execute software (or a program, an application, etc.) to control at least one other component of the electronic device 100 connected to the processor 110. The processor 110 may display or output a result processed by executing the software through a display module or a sound output module (e.g., a speaker). The processor 110 may execute the software to perform data processing or computations. For example, the processor 110 may store, in the memory 120, a command or data received from another component (e.g., the communication circuit 130, the first model 140, or the second model) of the electronic device 100. The processor 110 may process the command or data stored in the memory 120, and store resulting data in the memory 110.

As an example, the communication circuit 130 may establish a direct communication channel or a wireless communication channel between the electronic device 100 and an external electronic device (e.g., the user terminal 200 or the camera 300), and support wired/wireless communication through the established communication channel.

For example, the electronic device 100 may establish a communication channel with the user terminal 200 by using the communication circuit 130, and transmit data (or data combined with a broadcast video). For example, the electronic device may establish a communication channel with the camera 300 by using the communication circuit 130, and receive a plurality of first images (and/or a plurality of second images) from the camera 300.

As an example, the model 140 may be trained to output, when a plurality of images (e.g., the plurality of first images) are input, a type of an object included in the plurality of images. For example, descriptions of known neural network models for recognizing an object in an image may be applied substantially in the same manner to the model 140. For example, descriptions of known object detection models and object recognition models may be applied substantially in the same manner to the model 140.

According to an embodiment, the electronic device 100 may determine a position of the identified at least one object. For example, the electronic device 100 may determine the position of the object identified by the first model 140. The electronic device 100 may determine the position (e.g., three-dimensional coordinates) of the identified object in the set three-dimensional coordinate system.

As an example, the electronic device 100 may identify additional information by inputting the plurality of first images into the model 140. For example, the additional information may include a player's jersey number, a referee's gesture, and information displayed on a scoreboard. The additional information is not limited to the above examples, and may include objects and/or information that can be recognized by analyzing the plurality of first images.

As an example, the electronic device 100 may determine data related to the position of the at least one object. For example, the data may include information related to the position of the object. The data may include, but is not limited to, an average speed, a movement distance, a maximum speed, and a movement trajectory of the object.

As an example, the electronic device 100 may determine data by using the position of the at least one object and/or the additional information. For example, the electronic device 100 may determine a score status of each team/player by using the additional information (e.g., information displayed on the scoreboard). For example, the electronic device may determine a movement trajectory of a player or a ball by using the additional information (e.g., a jersey number) and the position of the object (the player).

According to an embodiment, the information included in the data may vary depending on the type of an event in progress in the filming place (e.g., a sports game, a function, etc.). For example, the data may vary depending on the type of the sports game in progress (e.g., a soccer game, a baseball game, a table tennis game, or an athletics competition).

When a soccer game is in progress in the filming place, the data may include information such as an average speed, a maximum speed, a movement distance, a movement trajectory, the number of fouls, the number of goals, a pass success rate, the number/ratio of shots on target, and the number of shots of each player, and information such as an attack route ratio of each team.

When a table tennis game is in progress in the filming place, the data may include information such as the number/ratio of serve points, an attack pattern ratio, an attack area ratio, an average speed of hit balls, and a maximum speed of hit balls of each player, and information regarding the movement trajectory of the table tennis ball.

The specific information included in the data is not limited to the above examples. The specific information included in the data may be determined according to settings, and the electronic device 100 may determine the data by using the position of the object and/or the additional information.

As an example, the electronic device 100 may determine prediction data by using at least one of the position of the object, the additional information, external information, or the data, or a combination thereof. For example, the prediction data may include predicted information regarding an event occurring in the filming place, such as an expected win probability of a game. For example, the external information may indicate information received by the electronic device 100 from the outside. For example, in the case of a sports game, the external information may include a winning rate, physical information (height, weight, age, etc.), and game patterns of each player.

As an example, the electronic device 100 may output prediction data by using a model trained to output prediction data (e.g., a prediction model). For example, the prediction model may be trained to output prediction data when at least one of the position of the object, the additional information, the external information, or the data, or a combination thereof is input. For the prediction model, various known artificial neural network models may be applied.

As an example, the electronic device 100 may transmit the data to the user terminal 200. For example, the electronic device 100 may receive, from the user terminal 200, a request regarding information to be transmitted to the user terminal 200 among the information included in the data. In response to the received request, the electronic device 100 may transmit the data including the requested information to the user terminal 200.

As an example, the electronic device 100 may receive a broadcast video or generate a broadcast video. The electronic device 100 may transmit the broadcast video and the data to the user terminal 200.

For example, the electronic device 100 may overlap visualized data on the broadcast video. The electronic device 100 may transmit, to the user terminal 200, the broadcast video on which the visualized data is overlapped.

For example, the electronic device 100 may combine visualized data with the broadcast video. The electronic device 100 may transmit, to the user terminal 200, the broadcast video with which the visualized data is combined.

As an example, the second model may be trained to output, when the type and position of an object are input, a control signal for generating a broadcast video. For example, the type and position of the object may be input into the second model for each set frame. The second model may be trained to output a control signal by using the type and position of the object input for each set frame.

For example, the electronic device 100 may determine a type of at least one object included in the plurality of first images for each set frame. The electronic device 100 may determine a position of the at least one object included in the plurality of first images for each set frame. The electronic device 100 may determine the control signal by inputting the type and position of the at least one object into the second model for each set frame.

For example, when a table tennis game is in progress in the filming space, the electronic device 100 may identify a type of each object (e.g., a player, a referee, a table tennis ball, a table tennis table, a scoreboard, etc.) by using the plurality of first images obtained from the plurality of detection cameras. The electronic device 100 may determine a position of each identified object.

For example, the control signal may include information for controlling operations of the plurality of filming cameras, and information regarding a second image to be used for the broadcast video among the plurality of second images.

As an example, training data for training the second model may include input data and ground truth data. For example, the training data may include the types and positions of respective objects obtained in a filming space in which the plurality of detection cameras and the plurality of filming cameras are installed, and a control signal for generating a broadcast video.

For example, the training data may include the types and positions of respective objects obtained in a filming space in which the plurality of detection cameras and the plurality of filming cameras are installed, and a broadcast video. The broadcast video may be understood substantially in the same manner as the control signal for generating the broadcast video. For example, the broadcast video may indicate the filming camera that captured the video used for the broadcast video, and operation information (e.g., PTZ values, direction/angle/magnification, etc.) of the filming camera.

The second model may be trained to output a control signal for generating a broadcast signal by using the input type and position of each object. The electronic device 100 may generate the broadcast video according to the positions of the respective objects by using the control signal.

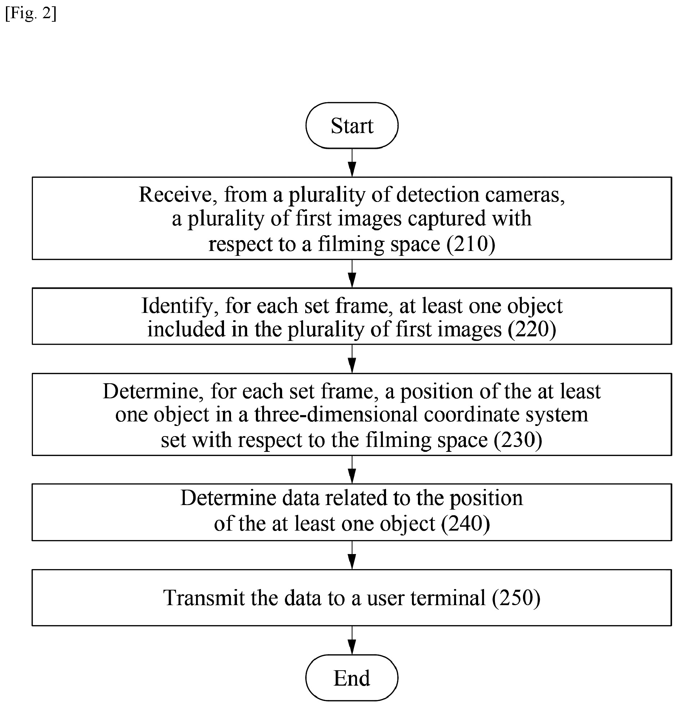

FIG. 2 is an operational flowchart of a method of analyzing data performed by the electronic device 100 according to various embodiments.

Referring to FIG. 2, in operation 210, the electronic device 100 according to various embodiments may receive, from the plurality of detection cameras, a plurality of first images captured with respect to the filming space.

For example, the plurality of detection cameras may be arranged around the filming space and fixed. The positions, directions, angles, and magnifications of the plurality of detection cameras may be fixed.

For example, the plurality of filming cameras may be arranged around the filming space, and their positions may be fixed. The directions, angles, and magnifications of the plurality of detection cameras may be controlled.

As an example, in operation 220, the electronic device 100 may identify at least one object included in the plurality of first images for each set frame. For example, the electronic device 100 may identify the at least one object by inputting the plurality of first images into the trained model 140. The model 140 may be trained to identify, when the plurality of first images are input, the types of the respective objects included in the plurality of first images.

As an example, in operation 230, the electronic device 100 may determine, for each set frame, a position of the at least one object in the three-dimensional coordinate system set with respect to the filming space. For example, the electronic device 100 may determine the position (three-dimensional coordinates) of the object by using the two-dimensional (pixel) coordinates of each object in the plurality of first images and the three-dimensional coordinates (in the set three-dimensional coordinate system) of the plurality of detection cameras.

As an example, in operation 240, the electronic device 100 may determine data related to the position of the at least one object. For example, the data may include information related to the object and/or the movement of the object. The electronic device 100 may determine the type and position of the object for each set frame. The electronic device 100 may determine the data related to the object by using the type and position (or time-series position change) of the object identified for each set frame.

As an example, in operation 250, the electronic device 100 may transmit the data to the user terminal 200.

Operations 210 to 250 illustrated in FIG. 2 may be performed substantially in the same manner by the processor 110 of the electronic device 100.

Operations 210 to 250 illustrated in FIG. 2 may be performed sequentially, but are not necessarily performed sequentially. For example, the order of the operations may be changed, and at least two of the operations may be performed in parallel.

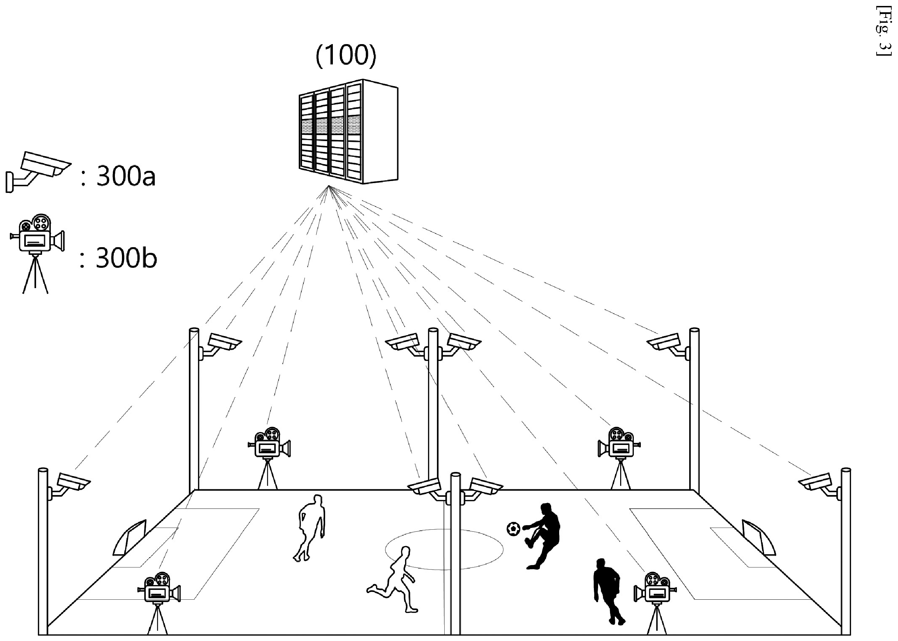

FIG. 3 is a diagram illustrating a plurality of detection cameras 300a and a plurality of filming cameras 300b arranged in a filming space according to various embodiments.

FIG. 3 is a diagram illustrating the plurality of detection cameras 300a and the plurality of filming cameras 300b arranged when the filming place is a soccer stadium.

As an example, the electronic device 100 may receive a plurality of first images from the plurality of detection cameras 300a arranged in the filming place. The electronic device 100 may identify at least one object by using the plurality of first images. The electronic device 100 may determine a position of the identified at least one object by using the plurality of first images. The electronic device 100 may determine the position (e.g., three-dimensional coordinates) of the at least one object in the set three-dimensional coordinate system.

As an example, the electronic device 100 may determine a control signal for generating a broadcast video by inputting the type and position of the at least one object into a trained model (e.g., the second model). The electronic device 100 may receive a plurality of second images from the plurality of filming cameras 300b. The electronic device 100 may generate the broadcast video by using at least one second image among the plurality of second images, according to the control signal.

The electronic device 100 may transmit the generated broadcast video to the user terminal 200.

The arrangement of the plurality of detection cameras 300a and the plurality of filming cameras 300b illustrated in FIG. 3 is illustrative, and is not limited to the example illustrated in FIG. 3.

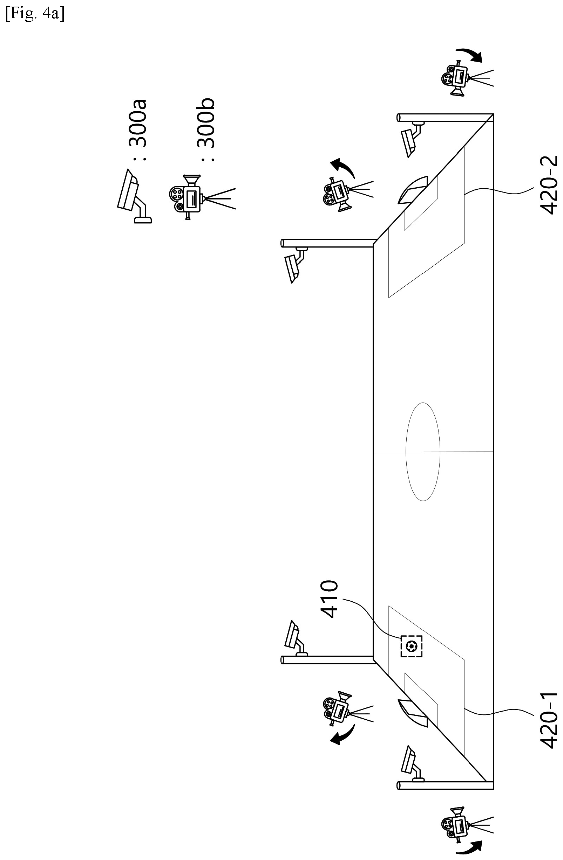

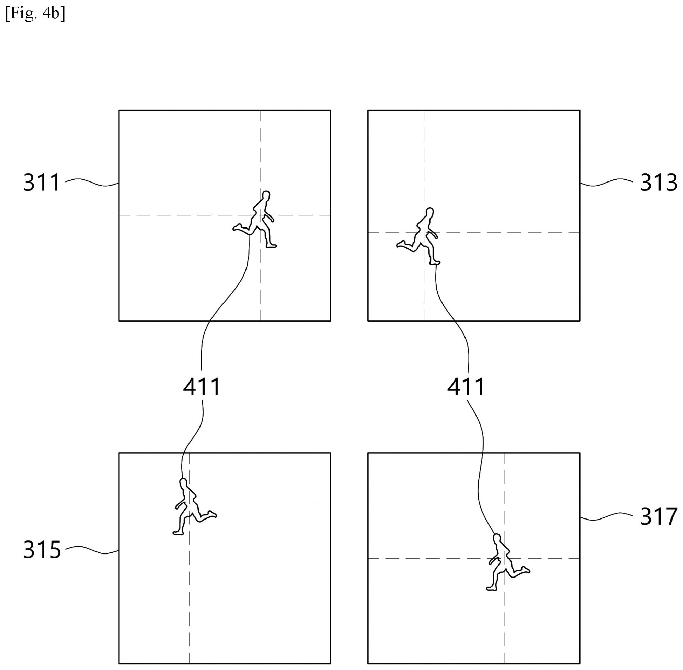

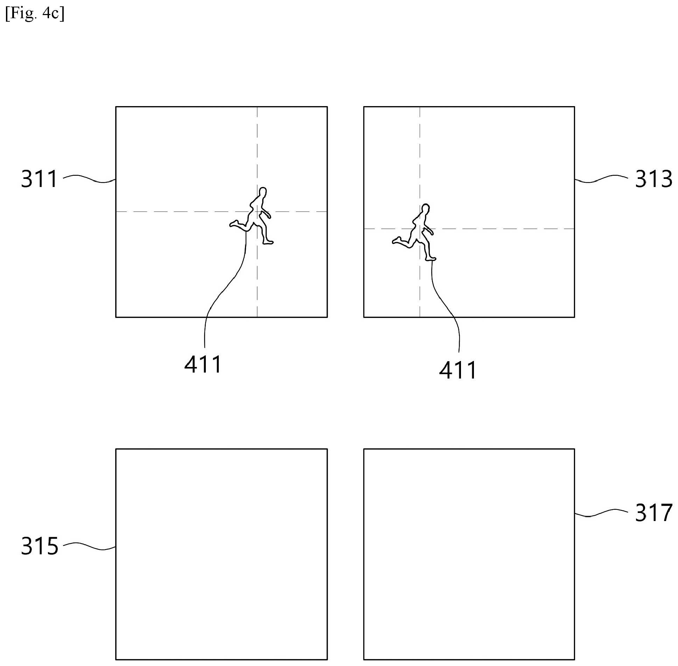

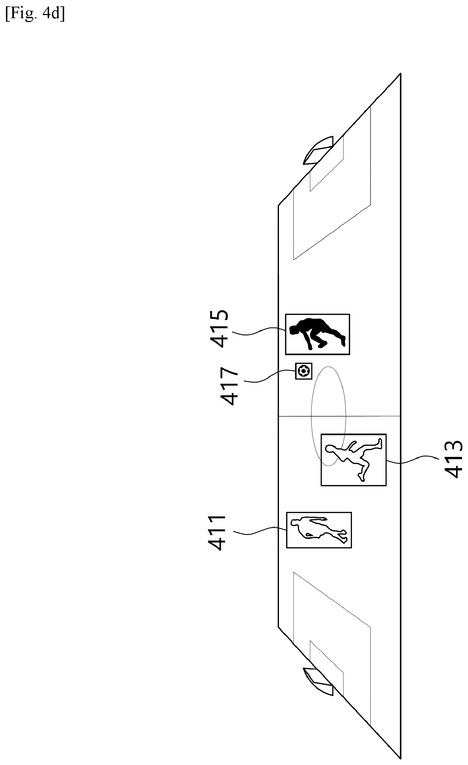

FIGS. 4A, 4B, 4C, and 4D are diagrams illustrating an operation in which the electronic device 100 recognizes an object, according to various embodiments.

FIG. 4A is a diagram illustrating a camera 300 (e.g., a plurality of detection cameras 300a and a plurality of filming cameras 300b), an object 410, and environments 420-1 and 420-2 arranged in a filming place.

As an example, the electronic device 100 may identify the object 410 by using the plurality of first images received from the plurality of detection cameras 300a. The electronic device 100 may determine a position of the object 410 by using the plurality of first images received from the plurality of detection cameras 300a.

As an example, the electronic device 100 may identify additional information by using the plurality of first images. For example, the electronic device 100 may identify additional information from objects included in the plurality of first images. For example, the additional information may include a player's jersey number, a referee's gesture, and information displayed on a scoreboard. The electronic device 100 may identify the environments 420-1 and 420-2 from the plurality of first images.

In the above example, the electronic device 100 may identify the environments 420-1 and 420-2 or the additional information by inputting the plurality of first images into a trained model (e.g., the model 140).

FIG. 4B is a diagram illustrating a plurality of first images 311, 313, 315, and 317 received from the plurality of detection cameras 300a.

In FIG. 4B, each of the plurality of first images 311, 313, 315, and 317 may include an object 411. The plurality of first images 311, 313, 315, and 317 may be captured from the plurality of detection cameras 300a arranged at different positions, respectively. Positions of the object 411 in the respective plurality of first images 311, 313, 315, and 317 may be different from each other.

The electronic device 100 may identify the object 411 by inputting the plurality of first images 311, 313, 315, and 317 into the first model 140. The electronic device 100 may determine the type of the object 411 to be a player.

FIG. 4C is a diagram illustrating a plurality of first images 311, 313, 315, and 317 received from the plurality of detection cameras 300a. In FIG. 4C, unlike FIG. 4B, the first image 311 and the first image 313 include the object 411, but the first image 315 and the first image 317 do not include the object 411. For example, when the detection cameras that captured the first image 315 and the first image 317 do not face the direction of the object 411, the first image 315 and the first image 317 may not include the object 411. For example, even when the detection cameras that captured the first image 315 and the first image 317 face the direction of the object 411, if the object 411 is covered by an obstacle or another object, the first image 315 and the first image 317 may not include the object 411.

As illustrated in FIG. 4C, even when the first image 311 and the first image 313 include the object 411 but the first image 315 and the first image 317 do not include the object 411, the electronic device 100 may identify the object 411 by using the plurality of first images 311, 313, 315, and 317.

FIG. 4D is a diagram illustrating objects 411, 413, 415, and 417 recognized by using the plurality of first images 311, 313, 315, and 317.

As illustrated in FIG. 4D, the electronic device 100 may identify the objects 411, 413, 415, and 417. For example, the electronic device 100 may identify the object 411 and the object 413 as players. For example, the electronic device 100 may identify the object 415 as a referee. For example, the electronic device 100 may identify the object 417 as a soccer ball.

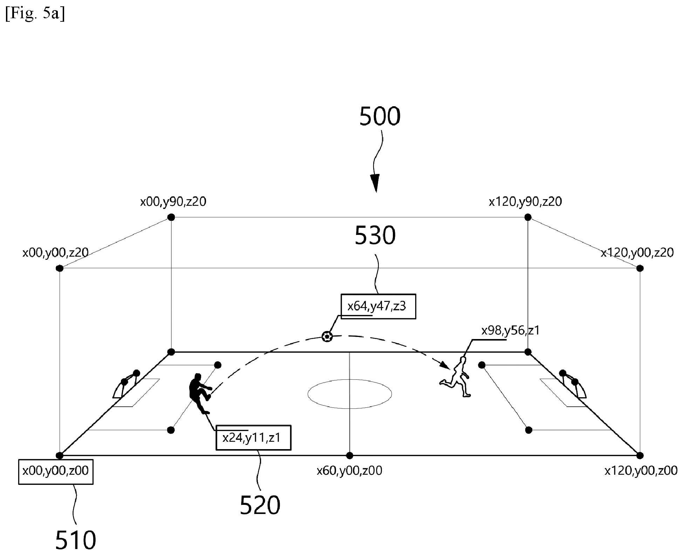

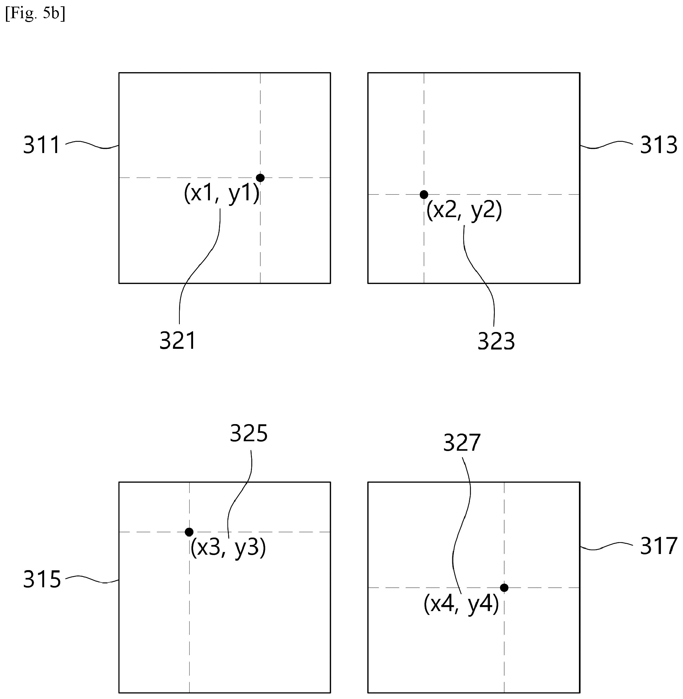

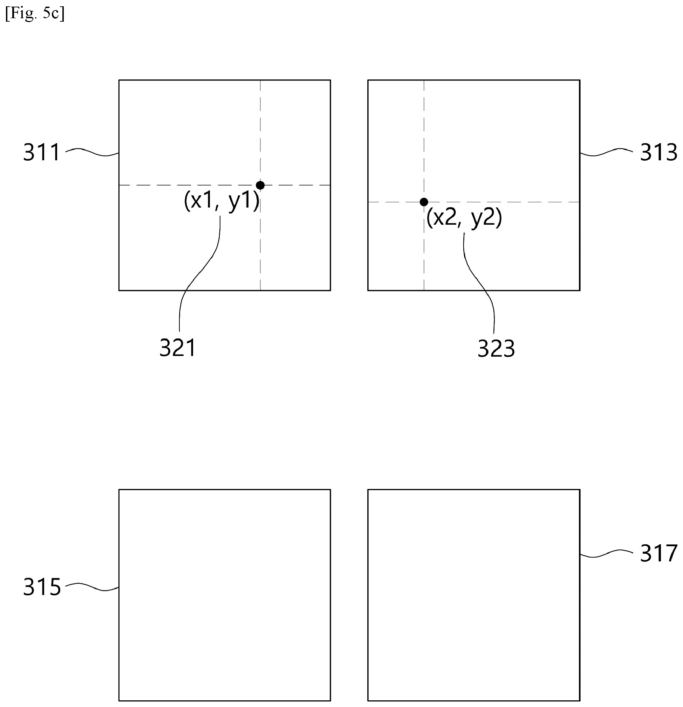

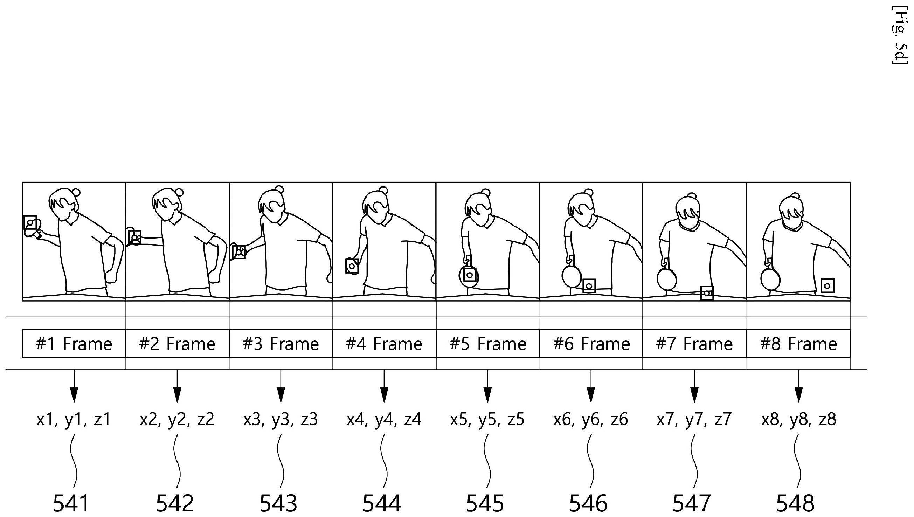

FIGS. 5A, 5B, 5C, and 5D are diagrams illustrating an operation in which the electronic device 100 determines a position of an object, according to various embodiments.

FIG. 5A is a diagram illustrating a three-dimensional coordinate system 500 and coordinates 520 and 530 of objects according to various embodiments.

For example, the three-dimensional coordinate system 500 may be set with respect to the filming space. For example, the plurality of detection cameras 300a may be arranged around the filming space. Through calibration, distortion of the plurality of first images obtained from the plurality of detection cameras 300a arranged around the filming space may be removed.

For example, an origin 510 of the three-dimensional coordinate system 500 may be determined to be an arbitrary position in the filming place. As illustrated in FIG. 5A, one corner of the soccer stadium may be determined as the origin 510 of the three-dimensional coordinate system 500.

For example, a calibration plate arranged in the filming place may be captured by at least one detection camera. In one or more images capturing the calibration plate, pixels in which the calibration plate is displayed may be understood as capturing the same position. By repeating capturing of the calibration plate arranged at different places in the filming place by using one or more detection cameras, the position of each detection camera may be estimated (or determined), and a three-dimensional coordinate system (having an arbitrary position in the filming place as the origin) may be set.

As an example, when the origin 510 of the three-dimensional coordinate system 500 is determined, the three-dimensional coordinate system 500 may be set with respect to the filming place. Positions (e.g., three-dimensional coordinates) of the plurality of detection cameras 300a may be determined in the three-dimensional coordinate system 500. Positions (e.g., three-dimensional coordinates) of the plurality of filming cameras 300b may be determined in the three-dimensional coordinate system 500.

As illustrated in FIG. 5A, the electronic device 100 may determine the position (e.g., three-dimensional coordinates) of an object. For example, the electronic device 100 may determine the position of a person to be coordinates 520 ((x24, y11, z1) or (24, 11, 1)). The electronic device 100 may determine the position of a ball to be coordinates 520 ((x64, y47, z3) or (64, 47, 3)).

FIG. 5B is a diagram illustrating coordinates 321, 323, 325, and 327 of an object in the plurality of first images 311, 313, 315, and 317 received from the plurality of detection cameras 300a.

The plurality of first images 311, 313, 315, and 317 are two-dimensional, and the coordinates 321, 323, 325, and 327 of the object in each image may be expressed as two-dimensional coordinates (e.g., (x1, y1), (x2, y2), (x3, y3), and (x4, y4)).

For example, the position of the detection camera that captured the first image 311 may be (x1, y1, z1). By using the coordinates 321 of the object in the first image 311, a direction and/or an angle of viewing the object from the position (x1, y1, z1) of the detection camera may be calculated.

By using the position (x1', y1', z1') of the detection camera and the direction and/or angle of viewing the object from the position (x1', y1', z1') of the detection camera, a virtual first straight line passing through the position (x1', y1', z1') of the detection camera and the object may be calculated.

Substantially in the same manner as the virtual first straight line passing through the position (x1', y1', z1') of the detection camera and the object is calculated, a virtual second straight line passing through the position (x2', y2', z2') of the detection camera and the object may be calculated by using the coordinates (x2, y2) of the object in the second image 313 and the position (x2', y2', z2') of the detection camera. A virtual third straight line passing through the position (x3', y3', z3') of the detection camera and the object, and a virtual fourth straight line passing through the position (x4', y4', z4') of the detection camera and the object may also be calculated substantially in the same manner as the above examples.

For example, the electronic device 100 may calculate an intersection point of the first to fourth straight lines. The electronic device 100 may determine coordinates of the intersection point of the first to fourth straight lines as the coordinates of the object.

The above description of the operation in which the electronic device 100 determines the coordinates of the object by using the coordinates 321, 323, 325, and 327 of the object in the plurality of first images 311, 313, 315, and 317 and the positions of the plurality of detection cameras 300a is illustrative, and is not limited to the above examples. The electronic device 100 may determine the coordinates of the object by applying a known method of calculating the positions of the plurality of detection cameras 300a in the set three-dimensional coordinate system, or a method that can be easily derived by those of ordinary skill in the art.

FIG. 5C is a diagram illustrating a plurality of first images 311, 313, 315, and 317 received from the plurality of detection cameras 300a. In FIG. 5C, unlike FIG. 5B, the first image 311 and the first image 313 include the object 411, but the first image 315 and the first image 317 do not include the object 411. The electronic device 100 may determine the position of the object by using the coordinates 321 and 323 of the object in the first image 311 and the first image 313, and the positions of the detection cameras that captured the first image 311 and the first image 313.

FIG. 5D is a diagram illustrating an operation in which the electronic device 100 determines the position of an object in time series. The electronic device 100 may determine the position of the object for each set frame. For example, as illustrated in FIG. 5D, when each of the plurality of detection cameras 300a captures images at 8.3 ms / 120 fps, the electronic device 100 may determine the position of the object for every one frame. The electronic device 100 may determine the position 541 of the object (e.g., a table tennis ball) to be (x1, y1, z1) in frame 1. The electronic device 100 may determine the position 542 of the object (e.g., the table tennis ball) to be (x2, y2, z2) in frame 2. The electronic device 100 may determine the position 543 of the object (e.g., the table tennis ball) to be (x3, y3, z3) in frame 3. The electronic device 100 may determine the position 544 of the object (e.g., the table tennis ball) to be (x4, y4, z4) in frame 4. The electronic device 100 may determine the position 545 of the object (e.g., the table tennis ball) to be (x5, y5, z5) in frame 5. The electronic device 100 may determine the position 546 of the object (e.g., the table tennis ball) to be (x6, y6, z6) in frame 6. The electronic device 100 may determine the position 547 of the object (e.g., the table tennis ball) to be (x7, y7, z7) in frame 7. The electronic device 100 may determine the position 548 of the object (e.g., the table tennis ball) to be (x8, y8, z8) in frame 8.

The electronic device 100 may input the position of the object into a trained model (e.g., the second model) for each set frame (e.g., every one frame). The electronic device 100 may generate a broadcast video by using at least one second image among the plurality of second images received from the plurality of filming cameras, according to an output of the trained second model.

The method in which the electronic device 100 determines the position of the object is not limited to the examples illustrated in FIGS. 5A, 5B, 5C, and 5D above. For example, the electronic device 100 may determine the three-dimensional coordinates of the object by using distances between the plurality of detection cameras 300a and the object, and the positions of the detection cameras 300a. For example, the electronic device 100 may calculate a direction from the detection camera toward the object by using the coordinates 321 of the object in the first image 321. The electronic device 100 may determine the position (e.g., three-dimensional coordinates) of the object in the three-dimensional coordinate system by using the position of the detection camera, the direction from the detection camera toward the object, and the distance between the detection camera and the object.

The distances between the plurality of detection cameras 300a and the object may be calculated through various known methods. For example, the plurality of filming cameras 300a may be depth cameras. For example, when the plurality of filming cameras 300a are single cameras, various methods and/or algorithms for estimating a distance between a single camera and an object may be applied.

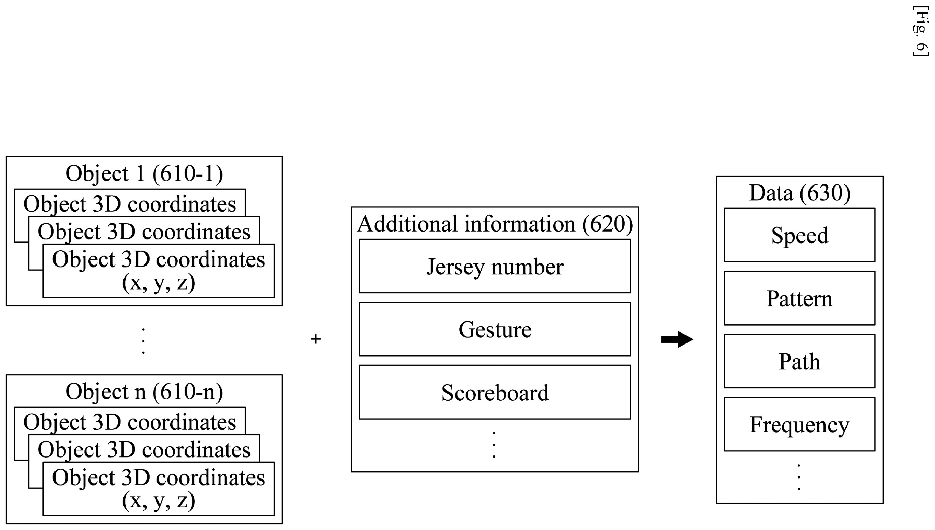

FIG. 6 is a diagram illustrating an operation in which the electronic device 100 generates data 630, according to various embodiments.

Referring to FIG. 6, the electronic device 100 according to an embodiment may determine data 630 by using at least one of the type of the object, the position of the object, or additional information, or a combination thereof.

According to an embodiment, the electronic device 100 may determine the data 630 by using the position of Object 1 610-1 for each frame and the position of Object n 610-n for each frame. For example, the electronic device 100 may determine a speed of Object 1 610-1 by using the positions of Object 1 610-1 within set frames from a current time point.

Referring to FIG. 6, the electronic device 100 may determine the data 630 by using the position of Object 1 610-1 for each frame, the position of Object n 610-n for each frame, and additional information 620. For example, the data 630 may include, but is not limited to, a speed, a pattern, a path, and a frequency.

As an example, the electronic device 100 may determine the additional information 620 by using the plurality of first images. For example, the additional information 620 may include a jersey number, a gesture (of a referee or a player), information displayed on a scoreboard, and the like. For example, the electronic device 100 may output the additional information by using the model 140. For example, the model 140 may be trained to identify the objects and the additional information 620 included in the input plurality of images.

According to an embodiment, the electronic device 100 may determine prediction data by using the position of Object 1 610-1 for each frame, the position of Object n 610-n for each frame, the additional information 620, and the data 630. For example, the prediction data may include predicted information regarding an object or a game.

According to an embodiment, the electronic device 100 may output prediction data by inputting the position of Object 1 610-1 for each frame, the position of Object n 610-n for each frame, the additional information 620, and the data 630 into a trained prediction model.

According to an embodiment, the electronic device 100 may output prediction data by inputting the position of Object 1 610-1 for each frame, the position of Object n 610-n for each frame, the additional information 620, the data 630, and external information into the trained prediction model. For example, the external information may include information received from the outside regarding the object or the game (e.g., player information (height, age, ranking, winning rate), head-to-head records, etc.).

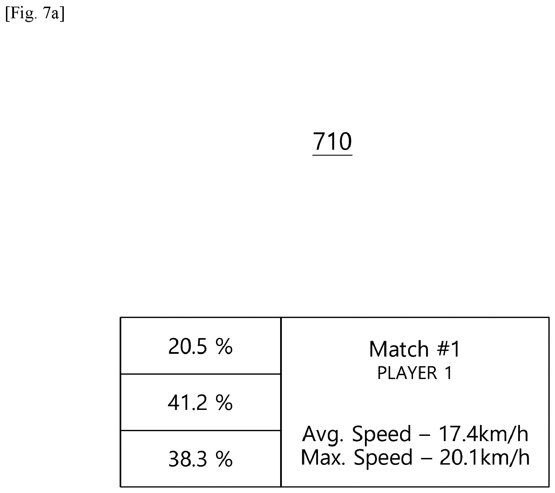

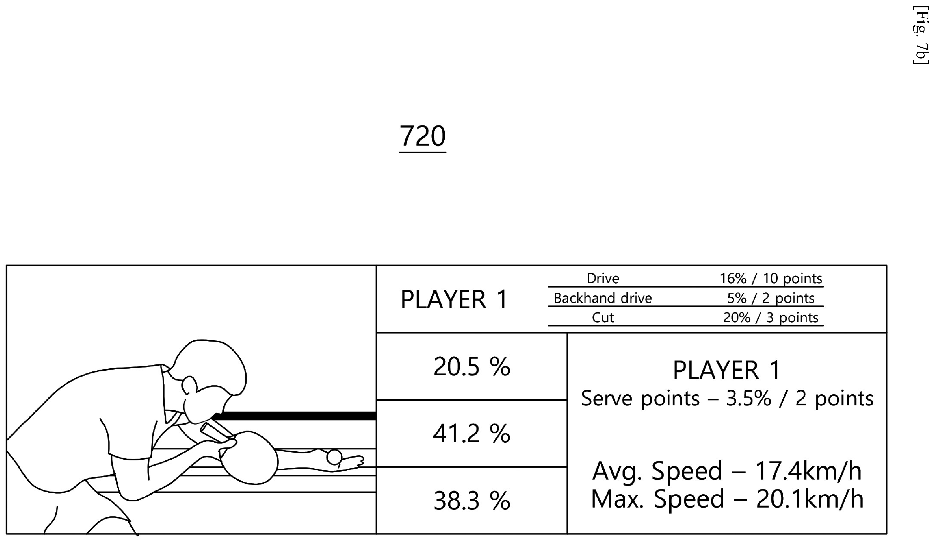

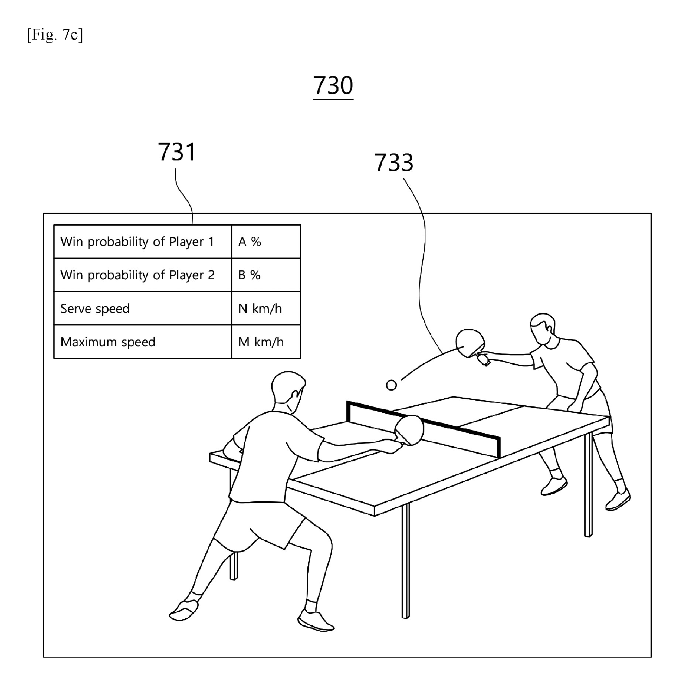

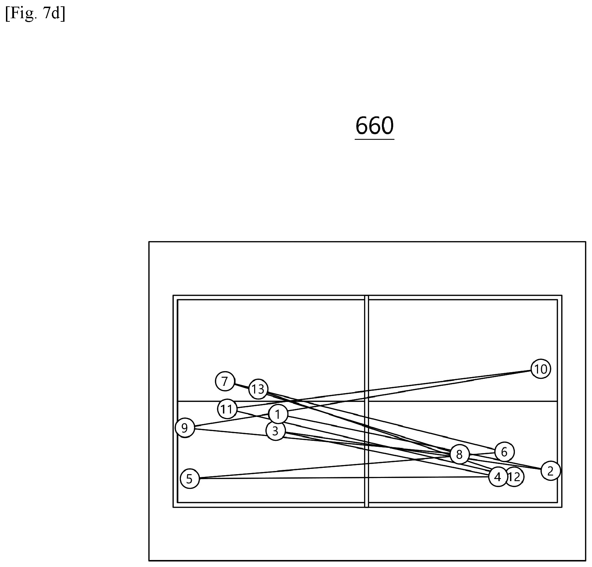

FIGS. 7A, 7B, 7C, and 7D are diagrams illustrating data provided by the electronic device 100 according to various embodiments.

FIG. 7A is a diagram illustrating a video 710 displaying data provided by the electronic device 100. The user terminal 200 may display the video 710 on which the data is displayed, by using a display device of the user terminal 200.

As illustrated in FIG. 7A, the data may include data regarding Player 1 in Match 1. The data may include a ratio of areas attacked by Player 1, and an average/maximum speed of the table tennis ball hit by Player 1.

The data illustrated in FIG. 7A is illustrative, and is not limited to the illustrated example.

As illustrated in FIG. 7B, the electronic device 100 may determine a broadcast video 720 including data.

For example, as illustrated in FIG. 7B, the electronic device 100 may generate a video 720 in which visualized data is combined with the broadcast video. The electronic device 100 may generate the video 720 by combining the visualized data with the broadcast video.

For example, the data may include, but is not limited to, a scoring ratio/number of points scored for attack patterns (e.g., drive, backhand drive, and cut) of Player 1, a ratio of attack points, a scoring ratio/number of points scored for serve points, an average speed, and a maximum speed.

For example, the electronic device 100 may generate a video in which visualized data is overlapped on the broadcast video, like a video 730 of FIG. 7C and a video 740 of FIG. 7D.

The electronic device 100 may generate the video 730 in which visualized data (e.g., the win probability of Player 1, the win probability of Player 2, the serve speed, and the maximum speed of FIG. 7C) is overlapped on the broadcast video, like the video 730 of FIG. 7C.

The electronic device 100 may generate the video 740 in which visualized data (e.g., the movement trajectory of the table tennis ball of FIG. 7D) is overlapped on the broadcast video, like the video 740 of FIG. 7D.

For example, after a score is made and before the players proceed to the next game, the electronic device 100 may determine the video 740. The electronic device 100 may determine the broadcast video 740 including data based on the type (e.g., a person or a table tennis ball) and position of the object.

The embodiments described above may be implemented as hardware components, software components, and/or a combination of hardware components and software components. For example, the devices, methods, and components described in the embodiments may be implemented by using a general-purpose computer or a special-purpose computer, such as, for example, a processor, a controller, an arithmetic logic unit (ALU), a digital signal processor, a microcomputer, a field programmable gate array (FPGA), a programmable logic unit (PLU), a microprocessor, or any other device capable of executing and responding to instructions. A processing device may execute an operating system (OS) and a software application executed on the operating system. In addition, the processing device may access, store, manipulate, process, and generate data in response to execution of software. For convenience of understanding, the processing device may be described as being used singly in some cases, but those of ordinary skill in the art will appreciate that the processing device may include a plurality of processing elements and/or a plurality of types of processing elements. For example, the processing device may include a plurality of processors, or one processor and one controller. In addition, other processing configurations, such as a parallel processor, are also possible.

Software may include a computer program, code, instructions, or a combination of one or more thereof, and may configure the processing device to operate as desired, or command the processing device independently or collectively. The software and/or data may be embodied permanently or temporarily in any type of machine, component, physical device, virtual equipment, computer storage medium or device, or transmitted signal wave, in order to be interpreted by the processing device or to provide commands or data to the processing device. The software may be distributed over network-connected computer systems, and stored or executed in a distributed manner. The software and data may be stored in a computer-readable recording medium.

The method according to the embodiments may be implemented in the form of program instructions that can be executed through various computer means, and recorded in a computer-readable medium. The computer-readable medium may store program instructions, data files, data structures, and the like, alone or in combination, and the program instructions recorded in the medium may be specially designed and configured for the embodiments, or may be known and usable to those skilled in computer software. Examples of the computer-readable recording medium include magnetic media such as hard disks, floppy disks, and magnetic tapes, optical media such as CD-ROMs and DVDs, magneto-optical media such as floptical disks, and hardware devices specially configured to store and execute program instructions, such as ROMs, RAMs, and flash memories. Examples of the program instructions include not only machine language code generated by a compiler, but also high-level language code that can be executed by a computer by using an interpreter or the like.

The hardware device described above may be configured to operate as one or a plurality of software modules to perform the operations of the embodiments, and vice versa.

As described above, although the embodiments have been described with reference to the limited drawings, those of ordinary skill in the art may apply various technical modifications and variations based thereon. For example, appropriate results may be achieved even if the described techniques are performed in an order different from the described method, and/or components of the described systems, structures, devices, circuits, and the like are coupled or combined in a form different from the described method, or replaced or substituted by other components or equivalents.

Therefore, other implementations, other embodiments, and equivalents to the claims also fall within the scope of the claims to be described below.

## Claims

1. An electronic device comprising:
at least one processor; and
a memory electrically connected to the at least one processor and storing at least one instruction executed by the processor,
wherein the at least one processor, when the at least one instruction is executed, causes the electronic device to:
receive, from a plurality of cameras, a plurality of images captured with respect to a filming space;
identify at least one object included in the plurality of images for each set frame;
determine, for each set frame, a position of the at least one object in a three-dimensional coordinate system set with respect to the filming space;
determine data related to the position of the at least one object; and
transmit the data to a user terminal.

2. The electronic device of claim 1, wherein the at least one processor:
determines two-dimensional coordinates of the at least one object by using each of the plurality of images; and
determines the position of the at least one object by using the two-dimensional coordinates of the at least one object.

3. The electronic device of claim 1, wherein the at least one processor:
recognizes additional information by using the plurality of images; and
determines the data based on the position of the at least one object and the additional information.

4. The electronic device of claim 1, wherein the at least one processor determines prediction data regarding the at least one object by using at least one of the position of the at least one object or the data.

5. The electronic device of claim 1, wherein the at least one processor:
identifies a broadcast video regarding the filming space and the at least one object; and
transmits the broadcast video and the data to the user terminal.

6. The electronic device of claim 5, wherein the at least one processor:
receives, from the plurality of cameras, a plurality of second images for generating the broadcast video; and
generates the broadcast video with at least one image among the plurality of second images based on a type and position of the at least one object.

7. The electronic device of claim 5, wherein the at least one processor controls at least one camera among the plurality of cameras based on the type and position of the at least one object.

8. The electronic device of claim 5, wherein the at least one processor:
generates a broadcast video in which the data is visually overlapped on the broadcast video; and
transmits the overlapped broadcast video to the user terminal.

9. The electronic device of claim 1, wherein the at least one processor transmits the data to the user terminal in response to a request received from the user terminal.

10. A method of analyzing data, the method comprising:
receiving, from a plurality of cameras, a plurality of images captured with respect to a filming space;
identifying at least one object included in the plurality of images for each set frame;
determining, for each set frame, a position of the at least one object in a three-dimensional coordinate system set with respect to the filming space;
determining data related to the position of the at least one object; and
transmitting the data to a user terminal.

11. The method of claim 10, wherein the determining of the position of the at least one object comprises:
determining two-dimensional coordinates of the at least one object by using each of the plurality of images; and
determining the position of the at least one object by using the two-dimensional coordinates of the at least one object.

12. The method of claim 10, further comprising recognizing additional information by using the plurality of images,
wherein the determining of the data comprises determining the data based on the position of the at least one object and the additional information.

13. The method of claim 10, further comprising determining prediction data regarding the at least one object by using at least one of the position of the at least one object or the data.

14. The method of claim 10, further comprising identifying a broadcast video regarding the filming space and the at least one object,
wherein the transmitting to the user terminal comprises transmitting the broadcast video and the data to the user terminal.

15. The method of claim 14, wherein the receiving of the broadcast video comprises:
receiving, from the plurality of cameras, a plurality of second images for generating the broadcast video; and
generating the broadcast video with at least one image among the plurality of second images based on a type and position of the at least one object.

16. The method of claim 14, further comprising controlling at least one camera among the plurality of cameras based on the type and position of the at least one object.

17. The method of claim 14, wherein the transmitting of the broadcast video and the data to the user terminal comprises:
generating a broadcast video in which the data is visually overlapped on the broadcast video; and
transmitting the overlapped broadcast video to the user terminal.

18. The method of claim 10, wherein the transmitting to the user terminal comprises transmitting the data to the user terminal in response to a request received from the user terminal.

19. A computer program stored in a computer-readable recording medium in combination with hardware to execute the method of any one of claims 9 to 18.
